# EUROPÄISCHE PATENTSCHRIFT

(11) **EP 0 854 893 B1**
(45) Veröffentlichungstag und Bekanntmachung des Hinweises auf die Patenterteilung: **10.03.1999**
(21) Anmeldenummer: 96930983.0
(22) Anmeldetag: 30.08.1996
(51) Int. Cl.: C08J 9/08, C08L 83/04

(54) **VERFAHREN ZUR SCHÄUMUNG ACYLOXYSILANHALTIGER SILIKONMASSEN**
PROCESS FOR FOAMING ACYLOXYSILANE-CONTAINING SILICONE MATERIALS
PROCEDE DE MOUSSAGE DE MATIERES SILICONES CONTENANT DE L'ACYLOXYSILANE

(30) Priorität: 11.10.1995 DE 19537771; 19.10.1995 DE 19538957
(43) Veröffentlichungstag der Anmeldung: 29.07.1998
(73) Patentinhaber: Heidelberger Bauchemie GmbH, 69120 Heidelberg (DE)
(72) Erfinder: HOHENEDER, Rudolf, D-83278 Traunstein (DE)
(74) Vertreter: Grussdorf, Jürgen, Dr.
(86) Internationale Anmeldenummer: EP9603816
(87) Internationale Veröffentlichungsnummer: WO9713804

(56) Entgegenhaltungen:
- EP-A- 0 118 325
- EP-A- 0 264 336
- FR-A- 1 198 749
- FR-A- 1 270 725
- DATABASE WPI Derwent Publications Ltd., London, GB; AN 80-21076C XP002019670 & JP,A,55 018 418 (SHINETSU CHEM. IND. KK.) , 8.Februar 1980
- DATABASE WPI Derwent Publications Ltd., London, GB; AN 80-21077C XP002019671 & JP,A,55 018 419 (SHINETSU CHEM. IND. KK.) , 8.Februar 1980

## Beschreibung

Die vorliegende Erfindung betrifft ein Verfahren zur Schäumung von Mischungen aus zumindest bifunktionell terminierten Diorganopolysiloxanen, Acyloxysilan-Vernetzungsmitteln, sowie ggf. Füllstoffen.

Solche auch als kaltvulkanisierende, einkomponentige Silikonkautschuke bekannte Organopolysiloxan-Mischungen, welche ggf. noch geeignete Additive, Pigmente, Farbstoffe, Oxidations-, Hitze- und Lichtschutzpigmente sowie Lösungsmittel und Weichmacher enthalten und im verarbeitungsfertigen Zustand in flüssiger oder pastöser Form vorliegen, sind als solche z.B. in FR 1 198 749 oder US 3 133 891 beschrieben. Die Mischungen vemetzen üblicherweise bei Raumtemperatur unter Aufnahme von Wasser aus der umgebenden Atmosphäre zu kautschukelastischen Polymeren. Als Vemetzer werden tri- und höherfunktionelle Acyloxysilanverbindungen eingesetzt, welche durch Reaktion mit dem Polysiloxan bzw. durch Hydrolyse Carbonsäuren abspalten und so die Ausbildung eines makromolekularen Netzwerkes einleiten. Nach erfolgter Aushärtung zeichnen sich solche Massen durch eine gute Eigenhaftung auf den unterschiedlichsten Werkstoffoberflächen und durch eine allgemein hohe Beständigkeit gegenüber Temperatur-, Licht-, Feuchtigkeits- sowie Chemikalieneinwirkung aus. Aufgrund dieser Eigenschaften werden einkomponentige, unter Abspaltung von Carbonsäuren härtende Silikonmassen bevorzugt für Abdichtungszwecke verwendet.

Ein Nachteil der beschriebenen Silikonmassen ist deren geringe Komprimierbarkeit, so daß bei Einsatz z. B. als Dichtungsschnur hohe Anpressdrücke auf die abzudichtenden Bauteile erforderlich sind, um die gewünsche Dichtigkeit zu erreichen. Aus diesem Grunde werden in der Technik oftmals schäumbare Elastomere auf Basis von Polyurethanen oder von edelmetallkatalysierten, additionsvernetzenden Silikonmassen aus vinylgruppenhaltigen Siloxanen und Wasserstoffsiloxanen für die Herstellung von Dichtungen verwendet. Das Einsatzgebiet von Polyurethansystemen ist allerdings durch deren eingeschränkte Beständigkeit gegenüber der Einwirkung von höheren Temperaturen und auch von bestimmten chemischen Stoffen eingeengt. Schäumbare edelmetall-, vorwiegend platin katalysierte additionsvernetzende Silikon massen verfügen zwar über eine weitaus höhere Temperaturbeständigkeit, haben aber den Nachteil, daß diese Produkte keine bzw . nur eine sehr geringe Eigenhaftung auf den abzudichtenden Werkstoffen aufweisen. Darüber hinaus sind diese Systeme im reaktiven Zustand, also vor Aufschäumung und Aushärtung, äußerst anfällig gegenüber bestimmten chemischen Stoffen, insbesondere schwefel- und stickstoffhaltigen Verbindungen, welche bereits bei Anwesenheit in Spuren das Katalysatorsystem dieser Produkte inhibieren und so dessen Aufschäumung und Aushärtung unterbinden können. Eine Applikation additionsvemetzender Silikonschaumsysteme auf Werkstoffen, welche solche Katalysatorgifte enthalten, ist somit nicht möglich (vgl. EP 0 416 229-A2 und EP 0 416 516-A2).

Die eingangs erwähnten acyloxysilanvemetzenden Silikonmassen weisen hingegen eine ausreichende Beständigkeit bei höheren Gebrauchstemperaturen und bei chemischen Belastungen auf. Das Vemetzungssystem dieser Produkte ist unempfindlich gegenüber schwefel- oder stickstoffhaltigen Verbindungen. Darüber hinaus weisen acyloxysilanvemetzende Silikone Eigenhaftung auf vielen gebräuchlichen, insbesondere auf silikatischen Werkstoffen auf.

Die Aushärtung dieser einkomponentigen, bei Raumtemperatur unter Feuchtigkeitsaufnahme vernetzenden Polysiloxan-Mischungen verläuft allerdings verhältnismäßig langsam, da das für die Reaktion erforderliche Wasser gasförmig aus der umgebenden Atmosphäre in das Innere der Masse diffundieren muß. Die Geschwindigkeil der Durchhärtung nimmt daher mit fortschreitender Reaktion im Inneren der Masse kontinuierlich ab. Bei geringer Feuchtigkeit der umgebenden Atmosphäre oder bei einem ungünstigen Verhältnis von Oberfläche zu Volumen der Silikonmasse kann die Reaktion sehr langsam werden oder wie in dampfdicht abgeschlossenen Räumen auch vollständig zum Stillstand kommen. Wegen dieser nur langsamen Aushärtung können luftfeuchtigkeitsvernetzende acyloxysilanhaltige Silikonmassen nicht mit bekannten Verfahrensweisen, wie z.B. durch Vermischung mit Treibgasen aufgeschäumt werden. Der entstehende Schaum würde innerhalb kurzer Zeit in sich zusammenfallen. Eine Beschleunigung der Aushärtung durch Zusatz von flüssigem Wasser wird zwar in US 3 133 891 genannt, ist aber wegen der Schwierigkeiten mit einer homogenen Verteilung nicht praktikabel.

Die der Erfindung zugrundeliegende Aufgabe bestand somit darin, ein Verfahren zur Schäumung von Silikonmassen auf Basis von acyloxysilanvemetzenden Polysiloxanmischungen zur Verfügung zu stellen, wobei diese innerhalb kurzer Zeit, d.h. innerhalb weniger Minuten unter Aufschäumung aushärten sollen, um ein Zusammenfallen des aufgeschäumten Materials zu verhindern. Die typischen vorteilhaften Merkmale der bei Luftfeuchtigkeitsvernetzung entstehenden bisher bekannten Vulkanisate, wie zum Beispiel Eigenhaftung und Beständigkeiten, sollen dabei im wesentlichen erhalten bleiben.

Die Aufgabe wird gelöst, indem den eingangs erwähnten und als solche bekannten einkomponentigen, acyloxysilanvemetzenden Silikonmassen unmittelbar vor deren Gebrauch ein Hydrogencarbonat als Treib- und Vernetzungsmittel zugesetzt wird. Ammoniumhydrogencarbonat ist dabei bevorzugt, Aminohydrogencarbonate können ebenfalls eingesetzt werden.

Die für die Schäumung einsetzbaren acyloxysilanvernetzenden Silikonmassen sind dadurch gekennzeichnet, daß sie mindestens folgende Bestandteile enthalten.
A) 100 Gew.-Teile eines zumindest bifunktionell mit Silanolgruppen terminierten Diorganopolysiloxans, wobei dieses aus einer linearen oder verzweigten Kette aus sich wiederholenden Einheiten der Formel I 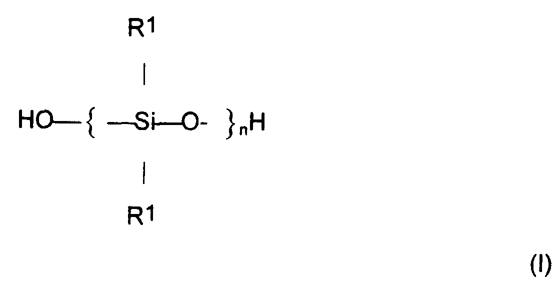 aufgebaut ist.
   Hierbei bedeuten:
   - R¹ :: gesättigte oder ungesättigte Kohlenwasserstoffreste mit 1-10 C-Atomen, ggf. substituiert mit Halogen- oder Cyanogruppen, wobei die Reste R¹ innerhalb der Polymerkette von unterschiedlichem Aufbau sein können,
   - n:: eine ganze Zahl von 1.500 bis 10.000,
B) 2 bis 20 Gew.-Teile eines Acyloxysilanvernetzers der allgemeinen Formel II

   R¹y-Si-(OCOR²)4-y (mit y = 0 und 1) (II)

   - R¹ :: wie oben beschrieben
   - R²:: einwertiger gesättigter Kohlenwasserstoffrest mit 1 bis 15 Kohlenstoffatomen
C) 0 bis 100 Gew.-Teile hochdisperse oder gefällte Kieselsäuren, deren spezifische Oberfläche nach BET vorzugsweise im Bereich von 40 bis 150 m²/g liegen kann.

Als Beispiel für den Rest R¹ des Bestandteiles A sind beliebige gesättigte Alkylreste wie Methyl, Ethyl, n-Propyl, Isopropyl, Octyl, Dodecyl, Octadecyl, aber auch cyclische wie Cyclopentyl und Cyclohexyl zu nennen. Darüber hinaus können ungesättigte aliphatische und cycloaliphatische Reste wie Vinyl, Allyl, Cyclopentenyl oder Cyclohexenyl und auch aromatische wie Phenyl oder Naphthyl und aliphatisch substituierte Arylreste wie beispielsweise Benzyl oder Toluyl verwendet werden. Die Reste R¹ können innerhalb eines Polysiloxans gleich oder auch verschieden sein. Auch ist es möglich, verzweigte und unverzweigte Polysiloxane mit dem vorstehend beschriebenen Aufbau und in unterschiedlicher Kettenlänge zu mischen. Vorzugsweise werden mit Hydroxylgruppen terminierte Polysiloxane, sogenannte α, Ω-Dihydroxydiorganopolysiloxane mit Methyl- und Phenylresten eingesetzt.

Die genannten Reste können auch in halogen- und cyansubstituierter Form eingesetzt sein. Beispiele hierfür sind 1,1,1-Trifluortoluyl, β-Cyanethyl oder o-, m- oder p-Chlorphenylreste.

Die Viskosität der Diorganopolysiloxane liegt vorzugsweise im Bereich von 6000 bis 350000 mPas, kann aber auch außerhalb dieses Bereiches liegen, bspw. wenn zusätzliche Kettenverlängerungsmittel und Vernetzer enthalten sind.

In Bestandteil B können zusätzlich Verbindungen der Formel III

R¹ ₂-Si-(COOR²)₂ oder (R¹0)₂-Si-(COOR²)₂ (III)

eingesetzt werden. Diese dienen - vorzugsweise in Kombination mit kurzkettigen Dihydroxydiorganopolysiloxanen - zur Verlängerung der Ketten der verwendeten Polysiloxane.

Statt den Bestandteilen A und die Komponente der Formel III mit der Vermischung mit Bestandteil B zusammenzubringen, kann auch das Reaktionsprodukt aus beiden vorher hergestellt und direkt verwendet werden.

Den Mischungen der Bestandteile A bis C können weitere Stoffe zur Erzielung spezieller Eigenschaften zugegeben werden. Zu nennen sind hier insbesondere Farbpigmente und lösliche Farbstoffe, Stabilisatoren gegen Oxidation und Hitzeeinwirkung, Dispergatoren, Reaktionskatalysaloren (z.B. Organozinnverbindungen, Titan- oder Zirkonester), Fungizide, Haftvermittler, Lösungsmittel, Flammschutzmittel, Weichmacher (vorzugsweise Silikonöle, aber auch auf Basis von Kohlenwasserstoffen), verstärkende Füllstoffe wie beispielsweise Graphit oder Ruß, sowie passive Füllstoffe wie z.B. Calciumcarbonat, Silikate, Quarzmehl, Glas- und Carbonfasern, Diatomeenerde, Metallpulver, Metalloxide sowie Kunststoffpulver.

Mischungen aus den Bestandteilen A bis C sind lagerstabil, solange ein Kontakt mit Feuchtigkeit und Alkalien ausgeschlossen ist.

Zur Aufschäumung und Vernetzungsbeschleunigung wird diesen acyloxysilanhaltigen, einkomponentigen Sililconmassen ein Hydrogencarbonat zugesetzt. Die zuzugebende Menge an Hydrogencarbonat beträgt vorzugsweise 1 bis 1,3 Mole pro Mol an in der zu schäumenden Silikonmasse vorhandenen Acyloxygruppen. Grundsätzlich kann diese Menge aber auch unter- bzw überschritten werden, um das Blasenbild, die Dichte und die Aushärtezeit des entstehenden Schaumes zu beeinflussen und um das Gesamtsystem an ggfs. vorgegebene Anforderungen bzw. Verarbeitungsparameter anzupassen. Bei Unterdosierung entstehen Schäume hoherer Diche mit verlangsamter Durchhärtung. Umgekehrt führt eine Überdosierung zu schneller aufschäumenden und aushärtenden Produkten mit niedrigerer Schaumdichte. Als Kation in dem Hydrogencarbonat wird Ammoniak bevorzugt, andere Amine sind jedoch ebenfalls geeignet.

Mischungen aus den Komponenten A bis C mit Hydrogencarbonat sind nicht lagerstabil. Das zur Schäumung und zur Reaktionsbeschleunigung notwendige Hydrogencarbonat wird deshalb der Mischung aus den Komponenten A, B und C unmittelbar vor Gebrauch in einer geeigneten Form, vorzugsweise zur besseren Vermischung angepastet in Silikonölen oder -polymeren vom Typ A, zugemischt.

Für die Reaktionsbeschleunigung und Schäumung kann ein Hydrogencarbonat handelsüblicher Qualität verwendet werden, wobei diese Salz in möglichst feiner Verteilung, vorzugsweise mit einer mittleren Korngröße unter 50 µm vorliegen sollle. Es hat sich als vorteilhaft erwiesen, z.B. kristallines Ammoniumhydrogencarbonat in Silikonöl oder Silikonpolymer gemäß Bestandteil A vorzudispergieren und diese Dispersion über einen Walzenstuhl weiter zu homogenisieren, bis die gewünschte Kornfeinheit erreicht ist. Zur Vermeidung von Sedimentationserscheinungen während einer ggfs. erwünschten Lagerung kann dieser Anpastung zusätzlich hochdisperse Kieselsäure zugesetzt werden.

Durch diese Vorgehensweise wird die zunächst aus den Bestandteilen A, B und C bestehende Silikonmasse zur Grundkomponente eines zweikomponentigen Silikonschaumes, dessen zweite Komponente ein Hydrogencarbonat enthält und unmittelbar vor Gebrauch der Grundkomponente zugemischt werden kann. Diese Verarbeitung erfolgt bei technischen Anwendungen vorzugsweise über handelsübliche Zweikomponentenmisch- und Dosieranlagen mittels statischem oder dynamischem Mischprinzipes.

Die nach dem vorstehend beschriebenen Verfahren entstehenden Mischungen schäumen und verfestigen sich bei Temperaturen von 20 °C innerhalb von 10 bis 20 Minuten zu einem weichelastischen Schaum mit feiner, gleichmäßiger Zellstruktur. Bei Verwendung von 5 % Methyltriacetoxysilan in der zu schäumenden Silikonmischung und einer der Molzahl an Acetoxygruppen entsprechenden Molzahl von Ammoniumhydrogencarbonat liegt die erreichbare Volumenzunahme bei ca. 100-200 %. Durch Erhöhung der Anteile an Acetoxysilan und Ammoniumhydrogencarbonat in der Gesamtmischung kann die Volumenzunahme gesteigert werden.

Erfolgt die Anmischung der Schaumkomponenten bei erhöhten Temperaturen (bis 70 °C), dann führt dies erwartungsgemäß zu einer deutlich schnelleren Aushärtung und größeren Volumenzunahme.

Die erfindungsgemäßen Schäume haften von sich aus auf Untergründen aus Glas, Keramik, Holz, Farben- und Lacken, Beton, Putz, Metallen und Kunststoffen. Sie werden deshalb vorteilhafterweise verwendet als Abdichtungsschäume auf den vorgenannten Werkstoffen, eignen sich aber auch als Schutzüberzüge zur elektrischen oder thermischen Isolierung, zur Schwingungsdämpfung, und auch als Formmassen zur Herstellung von Abdrücken oder anderen Formteilen, welche sinnvoll aus geschäumten Elastomeren gefertigt werden.

Nachfolgend wird die Erfindung anhand eines Beispieles näher erläutert:
100 Gew.-Teile einer Komponente I bestehend aus
60,55 Gew.-Teilen einer α,Ω-Dihydroxydimethylpolysiloxans mit einer Viskosität von 20.000 mPas,
5,55 Gew.-Teilen Ethyltriacetoxysilan,
2,60 Gew.-Teilen einer hochdispersen Kieselsäure mit einer spezifischen Oberfläche nach BET von ca. 50 m²/g,
15,10 Gew.-Teilen eines Eisenoxid-Pigmentes,
15.10 Gew. -Teilen eines Quarzmehles,
0,01 Gew.-Teilen Dibutylzinndilaurat,
werden bei Raumtemperatur mit 20 Gew.-Teilen einer Komponente II, bestehend aus
72 Gew.-Teilen eines α,Ω-Dihydroxydimethylpolysiloxans mit einer Viskosität von 6.000 mPas,
3 Gew.-Teilen einer hochdispersen Kieselsäure rnit einer spezifischen Oberfläche nach BET von ca. 110 m²/g,
25 Gew.-Teilen Ammoniumhydrogencarbonat mit einer Kornfeinheit < 50 µm
homogen miteinander vermischt.

Die aus den Komponenten erhaltene Mischung schäumt bei Temperaturen von 20 °C innerhalb von 20 Minuten zu einem mechanisch belastbaren Elastomer-Schaum mit gleichmäßiger Zellstruktur auf. Die Dichte des Schaumes liegt bei 0.6 g/cm³. Bei der verwendeten Silikon-Grund-Komponente zeigt sich während dieser Zeit eine nur geringfüge Hautbildung durch Vernetzung aufgrund der Feuchtigkeit aus der umgebenden Atmosphäre.

Bringt man die angemischten Schaumkomponenten auf Oberflächen aus Glas, Glaskeramik, Email oder Porzellan auf, dann verbindet sich der entstehende Schaum mit diesen Werkstoffen, so daß er nur noch durch mechanische Zerstörung von den Oberflächen abgelöst werden kann.

Lagert man Proben des entstandenen Schaumes 50 Tage bei einer Temperatur von 250 °C, dann stellt sich bei dem Vulkanisat ein Gewichtsverlust von 10 % ein. Die Festigkeit und Dehnfähigkeit des Schaumes bleibt hierbei erhalten.

## Patentansprüche

1. Verfahren zur Schäumung von Mischungen aus bifunktionell terminierten Diorganopolysiloxanen und Acyloxysilanvernetzungsmitteln, **dadurch gekennzeichnet,** daß der Mischung eine ausreichende Menge eines Ammonium- oder Aminohydrogencarbonats zugefügt wird.

2. Verfahren nach Anspruch 1, **dadurch gekennzeichnet**, daß das Hydrogencarbonat als Pulver mit einer Korngröße von unter 50 µm vorliegt und mit dem Diorganopolysiloxan oder einem Silikonöl vorsuspendiert wird.

3. Verfahren nach Anspruch 1 oder 2, **dadurch gekennzeichnet,** daß der Polysiloxanmischung und/oder der Hydrogencarbonatmischung Füllstoffe, insbesondere hochdisperse Kieselsäure, zugefügt werden.

4. Verfahren nach einem oder mehreren der Ansprüche 1 bis 3, **dadurch gekennzeichnet**, daß als Diorganopolysiloxan eine Verbindung der Formel I 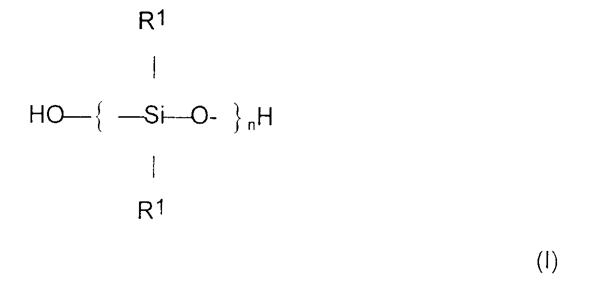 in der
R¹ : gesättigte oder ungesättigte Kohlenwasserstoffreste mit 1-10 C-Atomen, ggf. substituiert mit Halogen- oder Cyanogruppen, wobei die Reste R¹ innerhalb der Polymerkette von unterschiedlichem Aufbau sein können, und
n: eine ganze Zahl von 1.500 bis 10.000,
eingesetzt wird und als Vernetzungsmittel eine Verbindung der Formel II
R¹y-Si-(OCOR²)_{4-y} (mit y = 0 und 1) (II)
R¹: wie oben beschrieben
R²: einwertiger gesättigter Kohlenwasserstoffrest mit 1 bis 15 Kohlenstoffatomen
verwendet wird.

5. Verfahren nach Anspruch 4, **dadurch gekennzeichnet,** daß die Verbindung der Formel I eine Viskosität von 6.000 bis 350.000 mPas aufweist.

6. Verfahren nach einem oder mehreren der Ansprüche 1 bis 5, **dadurch gekennzeichnet**, daß der Mischung noch Farbpigmente und lösliche Farbstoffe, Stabilisatoren gegen Oxidation und Hitzeeinwirkung, Dispergatoren, Reaktionskatalysaloren, Fungizide, Haftvermittler, Lösungsmittel, Flammschutzmittel, Weichmacher, verstärkende Füllstoffe wie beispielsweise Graphit oder Ruß, sowie passive Füllstoffe wie z.B. Calciumcarbonat, Silikate, Quarzmehl, Glas- und Carbonfasern, Diatomeenerde, Metallpulver, Metalloxide sowie Kunststoffpulver zugefügt werden.

7. Silikonschäume herstellbar gemäß einem Verfahren gemäß einem der Ansprüche 1 bis 6.

8. Verwendung von Silikonschäumen gemäß Anspruch 7 zum Beschichten von Glas, Keramik, Holz, Farben- und Lacken, Beton, Putz, Metallen und Kunststoffen, sowie als Dichtungs- und Formmassen.

## Claims

1. Process for the foaming of mixtures of bi-functionally terminated diorganopolysiloxanes and acyloxysilane cross-linking agents, characterised in that to the mixture is added a sufficient amount of an ammonium or amino hydrogen carbonate.

2. Process according to claim 1, characterised in that the hydrogen carbonate is present as powder with a grain size of below 50 µm and is presuspended with the diorganopolysiloxane or a silicone oil.

3. Process according to claim 1 or 2, characterised in that to the polysiloxane mixture and/or to the hydrogen carbonate mixture are added filling materials, especially highly dispersed silicic acid.

4. Process according to one or more of claims 1 to 3, characterised in that, as diorganopolysiloxane, there is used a compound of the formula I 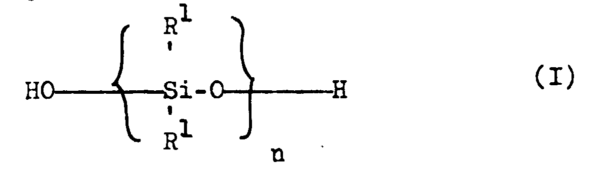 in which
R¹ are saturated or unsaturated hydrocarbon radicals with 1 - 10 C-atoms, possibly substituted with halogen or cyano groups, whereby the radicals R¹ within a polymer chain can be of different construction, and
n: a whole number from 1500 to 10,000
and, as cross-linking agent, a compound of the formula II
R¹ _{y}-Si-(OCOR²)_{4-y} (with y = 0 and 1) (II)
R¹: as above described
R²: monovalent saturated hydrocarbon radical with 1 to 15 carbon atoms.

5. Process according to claim 4, characterised in that the compound of the formula I has a viscosity of 6,000 to 350,000 mPas.

6. Process according to one or more of claims 1 to 5, characterised in that to the mixture there are also added coloured pigments and soluble dyestuffs, stabilisers against oxidation and the action of heat, dispersers, reaction catalysts, fungicides, adhesives, solvents, flame protection agents, plasticisers, strengthening filling materials, such as for example graphite or carbon black, as well as passive filling materials, such as e.g. calcium carbonate, silicates, quartz meal, glass and carbon fibres, diatomaceous earth, metal powder, metal oxides, as well as synthetic material powder.

7. Silicone foams producable according to a process according to one of claims 1 to 6.

8. Use of silicone foams according to claim 7 for coating of glass, ceramic, wood, pigments and lacquers, concrete, plaster, metals and synthetic materials, as well as as sealing and formed masses.

## Revendications

1. Procédé pour la transformation en mousse de mélanges constitués par des diorganopolysiloxanes à terminaisons bifonctionnelles et par des agents de réticulation acyloxysilanes, caractérisé en ce qu'on ajoute au mélange une quantité suffisante d'un hydrogénocarbonate d'ammonium ou d'un aminohydrogénocarbonate.

2. Procédé selon la revendication 1, caractérisé en ce que l'hydrogénocarbonate est présent sous la forme d'une poudre possédant une granulométrie inférieure à 50 µm et est soumis à une mise en suspension préalable avec le diorganopolysiloxane ou une huile de silicone.

3. Procédé selon la revendication 1 ou 2, caractérisé en ce qu'on ajoute au mélange de polysiloxane et/ou au mélange d'hydrogénocarbonate, des matières de charge, en particulier de l'acide silicique fortement dispersé.

4. Procédé selon l'une ou plusieurs des revendications 1 à 3, caractérisé en ce qu'on met en oeuvre, à titre de diorganopolysiloxane, un composé répondant à la formule I 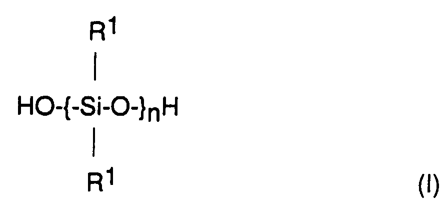 dans laquelle
R¹ représente des radicaux d'hydrocarbures saturés ou insaturés contenant de 1 à 10 atomes de carbone possédant, le cas échéant, un ou plusieurs substituants halogéno ou cyano, les radicaux R¹ au sein de la chaîne polymère pouvant être de constitution différente, et
n représente un nombre entier de 1.500 à 10.000,
et on utilise, à titre d'agent de réticulation, un composé répondant à la formule II
R¹y-Si-(OCOR²)_{4-y} (avec y = 0 et 1) (II)
dans laquelle
R¹ est tel que décrit ci-dessus, et
R² représente un radical d'hydrocarbure saturé monovalent contenant de 1 à 15 atomes de carbone.

5. Procédé selon la revendication 4, caractérisé en ce que le composé de formule I présente une viscosité de 6.000 à 350.000 mPa.s.

6. Procédé selon l'une ou plusieurs des revendications 1 à 5, caractérisé en ce qu'on ajoute au mélange en outre des pigments colorés et des colorants solubles, des stabilisateurs contre l'oxydation et contre les effets de la chaleur, des agents de mise en dispersion, des catalyseurs de la réaction, des fongicides, des agents adhésifs, des solvants, des agents ignifuges, des plastifiants, des matières de charge ayant un effet de renforcement telles que par exemple le graphite ou le noir de carbone, ainsi que des matières de charge passives telles que par exemple le carbonate de calcium, des silicates, de la poudre de quartz, des fibres de verre et de carbone, de la terre d'infusoires, des poudres métalliques, des oxydes métalliques, ainsi que des poudres synthétiques.

7. Mousses de silicone que l'on peut préparer conformément à un procédé selon l'une quelconque des revendications 1 à 6.

8. Utilisation de mousses de silicone selon la revendication 7, pour l'enduction du verre, de la céramique, du bois, de peintures et de laques, de béton, de crépis, de métaux et de matières synthétiques, ainsi que sous forme de matières d'étanchéification et de matières à mouler.
